# EUROPEAN PATENT APPLICATION

(11) **EP 1 762 928 A1**
(43) Date of publication of application: **14.03.2007**
(21) Application number: 05108275.8
(22) Date of filing: 09.09.2005
(51) Int. Cl.: G06F 3/14

(54) **Graphics device comprising remote transfer controller for remote visualization**

(71) Applicant: Agilent Technologies, Inc., Santa Clara, CA 95051 (US)
(72) Inventor: Holzinger, Bernhard, 71034 Böblingen (DE); Lohmiller, Tobias, 72160 Horb (DE); Klein, Frank, 71034 Böblingen (DE)
(74) Representative: Neuerburg, Gerhard

(57) **Abstract**

The invention relates to a graphics device (50), which is adapted to be coupled to an internal bus (25) of a local data processing unit, comprising a memory unit (60), which is adapted to store digital representation data of an image to be displayed on the monitor (22), wherein the digital representation data are provided to the memory unit (60) via the internal bus (25), a display controller (37), adapted to read out from the memory unit (60) digital representation data of the image and to provide this data to a local monitor (22), a remote transfer controller (31) adapted to select from the memory unit (60) at least a subset of the digital representation data, and a remote interface (33) adapted to receive from said remote transfer controller (31) the selected digital representation data or the subset thereof, or data based on the selected digital representation data or the subset thereof, and to transmit said data to a remote data processing unit for remote visualization.

## Description

### BACKGROUND ART

The present invention relates to a graphics device, which is adapted to be coupled to an internal bus of a local data processing unit for providing display of data on a monitor of the local data processing unit. The invention further relates to a remote visualization of digital representation data.

Remote visualization of images to be displayed on local display devices such as monitors of data processing units such as servers, workstations or personal computers, etc. has recently become widespread available. Remote visualization means that an image to be displayed locally is copied or completely redirected to a remote data processing system that is different from the local data processing unit. Remote visualization allows, among others, remote system maintenance, e.g., by a hardware or software vendor, testing or performing helpdesk functions for end users.

Visualization is realized by providing a graphics device, which transforms digital representation of an image provided by, e.g., a central processing unit (CPU) of a local data processing unit into signals which lead a monitor to display that image. The signals may be analog as generally in the case of CRT monitors or digital as it is often the case with respect to LCD-displays. A redirection of graphic information may be performed by adding a separate capture device to the system that captures the image contents and transfers it to a predetermined remote system.

Both devices, the graphics device and the capture device may communicate with each other via an internal bus, e.g., a PCI bus as shown in EP 1168154 B1 by the same applicant. The graphics device uses a memory unit, which is also called video memory. This memory unit contains the data of the digital representation of the image to be displayed on a local monitor. In order to make these data remotely available, the data are first selected by a remote data processing unit provided with the capture device. The data are then stored into a specific capture memory, which is also provided with the capture device.

This specific capture memory is particularly important as the bandwidth of the connection to the remote system, e.g., through a local area network (LAN) or even through an internet connection, may not be sufficient to guarantee data or image consistency. The capture memory of the capture device thus serves to provide a copy of the image data contained in the video memory and then to perform compression of these data, such that the data volume to be transferred to the remote location is reduced.

The selection of the digital representation data of the images can be embodied in at least two different modes: one (active) mode is to address the graphics device and then simply copy the data from the video memory via the PCI bus, the other (more passive) mode is to "snarf" the information when being transferred from the video memory to the local monitor, i.e., to monitor the information, which is transferred from the video memory to the local monitor and record the content.

### SUMMARY OF THE INVENTION

It is an object of the invention to improve the remote visualization of a local image data. The object is solved by the independent claims. Further embodiments are shown by the dependent claims.

According to embodiments of the invention, a graphics device, which is adapted to be coupled to an internal bus of a local data processing unit for providing display of data on a monitor of the local data processing unit, comprises a memory unit, which is adapted to store digital representation data of an image to be displayed on the monitor. The digital representation data are provided by, e.g., a CPU, to the memory unit via the internal bus. The graphics device further houses a display controller, which is connected to the memory unit for reading out digital representation data of the image and adapted to display the image on said monitor. Further, the graphics device is provided with a remote transfer controller for selecting at least a subset of the digital representation data. I.e., the graphics device is combined with a remote transfer controller, which - according to prior art - has been implemented separately on a capture device. The remote transfer controller is associated with a means to buffer said selected digital representation data, or the subset thereof, for compressing the data volume to be transferred to a remote location. This means buffering the selected data is incorporated into the memory unit, or video memory of the graphics device. Accordingly, a unified memory is used for performing the local image display as well as the remote visualization.

For the latter purpose of remote visualization, a remote interface for transferring the selected digital representation data, or the subset thereof, to a remote data processing unit, is also included into the graphics device. Thus, the means to buffer said digital representation data, or the subset thereof, is included into the memory unit and renders a separate capture memory unnecessary.

As the features of a graphic and capture device are combined into one single device relying on the same memory unit, costs are reduced and the traffic load on the internal bus system of the local data processing unit prior to compression, where the data volume may as well be large, is disentangled. In particular, the remote transfer controller does not need to address the video memory via the internal bus in order to retrieve and copy data from that memory into its own capture memory. Once the digital representation data are selected from buffers within the memory unit, they can be forwarded to the remote interface for making the data available for remote display. The invention includes simultaneous compressing or encoding to reduce the amount of data to be transferred.

The utilization of the video memory also for purposes of image data transfer to remote locations necessitates a revised management of buffers in that memory. Aspects of the invention deal with different concepts for such a buffer management. An overview of current buffer management is provided fi rst:

The content of image data displayed on the local display device is generally contained in a so called frame buffer, which is located in the video memory. The frame buffer relates to a virtual area in video memory and denotes that area, which stores the image to be displayed. Typically, a frame buffer is realized by implementing a hardware register, which defines a start address in video memory. With respect to the local display, there are essentially two different buffer management concepts, which are then adapted to interact with the implemented remote transfer controller:

The single frame buffer concept has the digital representation data of an image located in one single frame buffer. This frame buffer is continuously read by a display controller, which converts the data into displayable signals, and transfers these to the local display device, or monitor. Between displaying two consecutive images on the display device, there is a pause (vertical blanking interval). This pause is used by, e.g., the CPU host system in order to access the frame buffer for modifying the digital representation data of the image, and thus to update or refresh the image content displayed on the monitor.

According to the dual frame buffer concept, the display controller switches between two frame buffers in order to read the data, convert it to signals and display it on a local monitor. This switching between frame buffers by means of the display controller is controlled by a software implemented graphics driver. The CPU of the local processing device for example drives the graphics device to repeatedly generate a copy of the data contained in the frame buffer currently being read out. The copy is transferred into the respective second frame buffer.

The display controller continues to read data from the source frame buffer. Having finished the copy action, the CPU (or any other active device connected to the internal bus) is allowed to manipulate the copied digital representation data of the image. When the host system has finished manipulating the image data, the display controller is informed to switch over to read from the copied and meanwhile modified second frame buffer. Typically, this switching action is done in a pause between displaying two consecutive images on the monitor. The copy action is then reversed to the first frame buffer, which thereafter continues to be modified by, e.g., the CPU. The use of double frame buffering increases the time available to manipulate the digital representation of the image.

With regard to the graphics device according to the invention, an aspect relates to implementing one or more additional buffers in the memory unit, i.e., adding buffers to the single and double frame buffer concepts.

In the single buffer concept, a change buffer may be added to the frame buffer. Such a change buffer indicates changes, which have occurred in one or more of a plurality of subsections of the frame buffer. The remote transfer controller needs only to check for subsections in the frame buffer, which have actually changed within a recent time interval and reads out their data content. The necessary change detection is provided by the change buffer. The change buffer comprises a characteristic property, which is each related to a respective section of the frame buffer and reflects an occurrence of a write change within a recent time interval. For example, each one bit (as a characteristic property), or a sequence of bits (as a characteristic property) of the change buffer represents a write change applied to a specific subsection of the frame buffer. Each address in the frame buffer has a unique corresponding address in the change buffer.

A method of operating the video memory unit then may comprise steps of setting a bit (i.e., a flag) within the change buffer in response to a write change to a corresponding subsection in the frame buffer.

The remote transfer controller is arranged to read out only those data from the frame buffer, which have changed according to the bits or flags set in the change buffer. Consequently, the remote transfer controller first accesses the change buffer and then reads out data from the frame buffer in dependence of the results read from the change buffer. As a result only changed portions of the digital representation data are transferred to the remote interface, which considerably reduces the amount of data transfer and thus represents a compression of the data volume. Only once at the start of a remote display action has the complete image data to be read out by the remote transfer controller.

A particular advantage arises from the fact that the reading out and transferal of data from the frame buffer by the remote transfer controller may be performed in parallel to writing changes to this buffer by the host system.

A particularly advantageous aspect relates to adding so-called remote buffers to the frame buffer. The remote buffers differ from the frame buffer in that these are controlled by the remote transfer controller, while the frame buffer is controlled by the host system. However, the remote buffers store digital representation similarly to the frame buffer, and preferably - but not necessarily - are of the same size as the frame buffer. It is important to note that each of the buffers is configured within the same video memory.

The remote buffers are filled with duplicate information from the frame buffer upon write changes to the frame buffer. One remote buffer is in write mode (duplication of the frame buffer write change operation), and the other remote buffer is in read mode. The remote buffer in read mode is used by the remote transfer controller to read out digital representation data of the image to be displayed remotely. The remote buffer in write mode is concurrently filled with duplicate data by the host system. The remote transfer controller is arranged to switch the mode of both remote buffers coincidently.

The digital representation data stored in the remote buffers do not represent an actual image as the update operation, i.e., the duplication of data from the frame buffer, is always performed with respect to only one of the two remote buffers. Accordingly, each of the two remote buffers is preferably associated with its own change buffer, which is operated as explained above in the case of the frame buffer.

The advantage of this aspect arises from the fact that the image data transferred to the remote interface are consistent, because all changes are accumulated in the remote buffers. It has to be noted that no copy between the buffers takes place.

In the double frame buffer concept, digital representation data are read by the display controller while updates due to the host system (e.g. CPU) are performed on the other frame buffer. However, prior to this update operation, a copy of the content of the first frame buffer to the second is carried out. The remote transfer may also start, when the copy of the digital representation data has finished. Only one change buffer is needed, which co-switches with the remote transfer controller between the frame buffers in order to indicate the recent write changes. The read out of digital representation data by the remote transfer controller may continue even after the update operation by the host system has switched back to the respective other frame buffer.

A further embodiment of the invention herein relates to adding a remote buffer to the two frame buffers. The difference between the meaning of the frame buffers and the remote buffer is the same as in the single frame buffer concept. The added remote buffer is arranged in order to improve the consistency of graphics redirection to a remote display device. The added remote buffer serves to prolong the time available for a read due to the remote transfer controller, while the respective other two frame buffers are available for the common display-and-write/change scheme. When the remote transfer controller read operation has finished, which takes the longest duration, the function each of the read frame buffer, the copy and update frame buffer as well as the remote buffer may be redistributed.

Instead of connecting the remote transfer controller to the memory unit necessitating complex buffer management strategies, another aspect of the invention deals with connecting the remote transfer controller directly to the internal bus incoming at the graphics device. l.e., the remote transfer controller is not necessarily connected with the memory unit.

The remote controller is thereby arranged to snarf the data and instructions sent to the memory unit, or if present to an acceleration logic of the graphics device. Without further storage in a capture memory, the data and instructions (if present) are directly forwarded to the remote interface and further to the remote data processing unit.

### BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawings. Features that are substantially or functionally equal or similar will be referred to with the same reference signs.

Figs.1 and 2 show block diagrams of a remote system connected to a local system for the purpose of remote image display according to prior art;

Figs. 3 - 7 shows principles of embodiments according to the present invention.

### DETAILED DESCRIPTION OF THE INVENTION

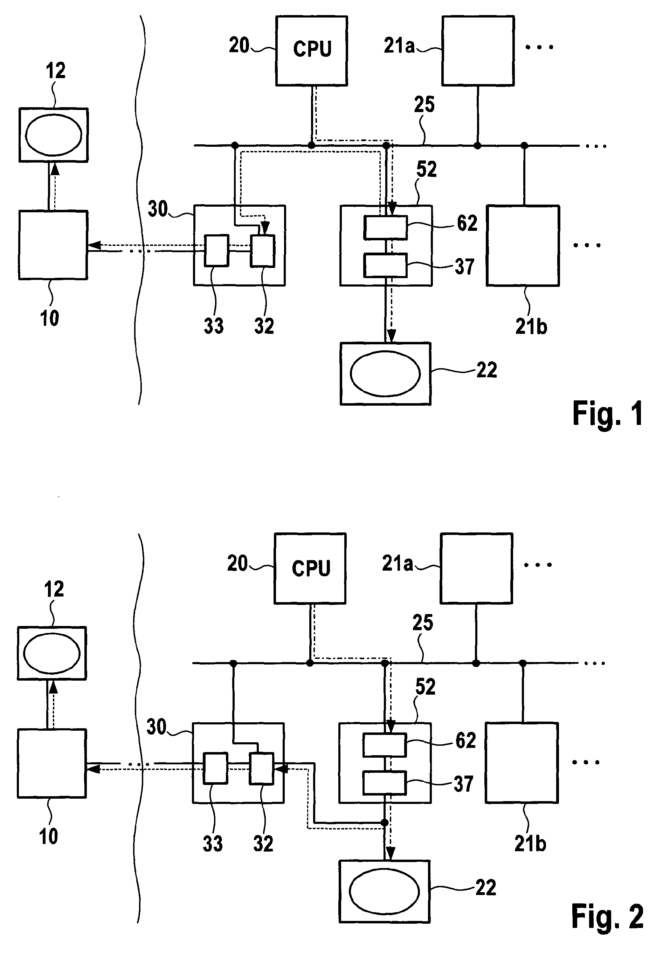

Figure 1 shows an embodiment of a remote system connected to a local system for the purpose of remote image display according to prior art. The remote system comprises a remote data processing unit 10 and a remote display 12. A CPU 20 of a local system (right hand side of the sinuous line) is connected to an internal bus 25 such as a PCI-bus or PCI-Express bus. A graphics device 52 is also connected to the internal bus. The graphics device comprises a video memory 62 for storing a digital representation of the data to be displayed on a local monitor 22. This display of an image is managed by means of a display controller 37 arranged on the graphics device. Further components 21 a, 21 b of the local system may also be connected to the internal bus 25.

A connection of the local system with the remote system for the purpose of remote image display is established by a capture device 30. The capture device 30 is connected to the internal bus 25 and comprises a capture memory 32 and a remote interface 33. Capturing of image data is accomplished by addressing - and accessing - the video memory 62 via the internal bus 25 with help of a capture device controller (not shown in Fig. 1) and retrieving full image data. The full image data are buffered in the capture memory 32, compressed and forwarded to the remote data processing unit via remote interface 32. The flow of redirected image data is indicated by the dashed line in the figures. An example flow of image data generated in the CPU 20 intended for local display is indicated by the dot-dashed line

Fig. 2 shows an alternative embodiment according to prior art. Herein, the capture device is arranged to retrieve image data from a connection between the display controller 37 and the local monitor 22. The data transferred herein are not redirected but snarfed, i.e. duplicated for local and remote display. As the data have already been processed by the display controller, the format of transferred data considerably differs between the embodiments of Figs.1 and 2.

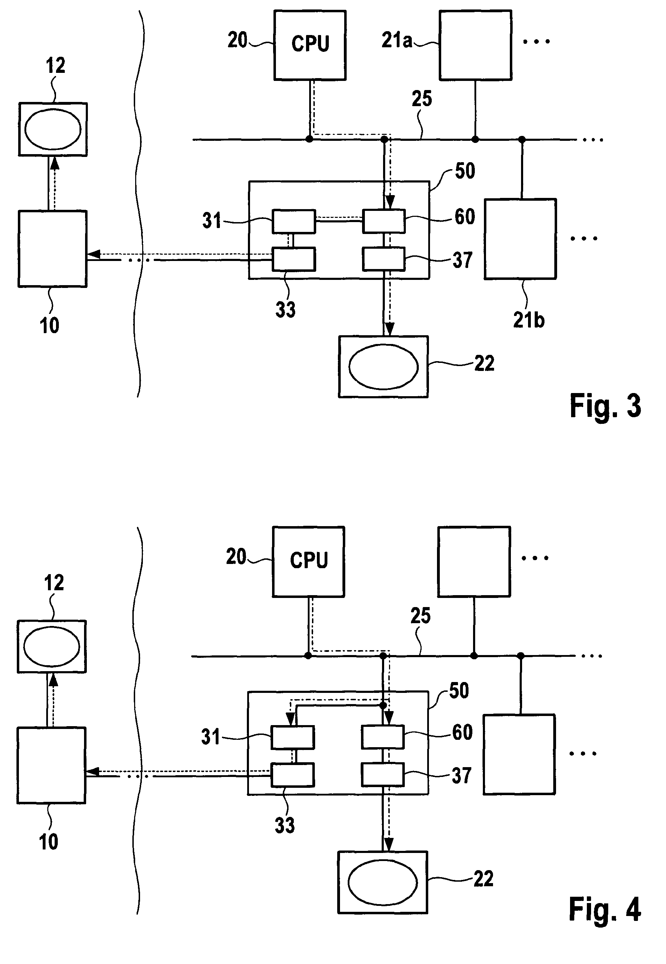

Fig. 3 shows an embodiment of a graphics device according to the invention. The unified graphics device 50 comprises a video memory 60, which is connected with the display controller 37 as well as with the remote controller 31. Both controllers can directly access the memory in order to retrieve and process data. The CPU 20 has storage access to the video memory 60 via internal bus 25 (e.g. AGP or PCI Express), to which is coupled the graphics device 50 by means of an appropriate bus interface (not shown). Remote controller 31 is connected with remote interface 33 in order to transfer data read out from memory 60 towards the remote data processing unit 10 for remote display on monitor 12.

Fig. 4 shows an alternative embodiment of a unified graphics device according to the invention. The concept of this embodiment is to snarf the digital representation data of the image when being written to the video memory 60 by the CPU 20. Accordingly, there is no memory access of the remote transfer controller 31 to the video memory 60. However, the graphics device is connected to the internal bus 25 via an appropriate interface since the connection of the remote controller to internal bus is maintained on the graphics device and not externally.

In other words, the data are not only written to a frame buffer within the video memory, but also compressed and encoded by the remote transfer controller in order to forward the processed data to the remote system. As a result, the data can be sent even before the data in the graphics device are stored in the video memory 60, retrieved by the display controller 37 and displayed on the local monitor 22 yielding an improved response time.

Further, as almost changes to an existing digital representation of an image rather than full image representations are snarfed, the amount of data to be transferred is considerably reduced. As compared with the snarfing configuration shown in Fig. 2, an improvement arises from the fact, that the display of data on a monitor 22 from a frame buffer in video memory 62 is done in a single block according to prior art, which is hard to be tracked on the fly, while in this embodiment only updates of an image in several smaller transfer blocks are to be snarfed before these enter the video memory 60. However, a combination of this aspect (direct access of remote controller 31 to internal bus 25 via graphics interface) and that shown in Fig. 3 (direct access to video memory 60) is not only possible, but provides further advantages.

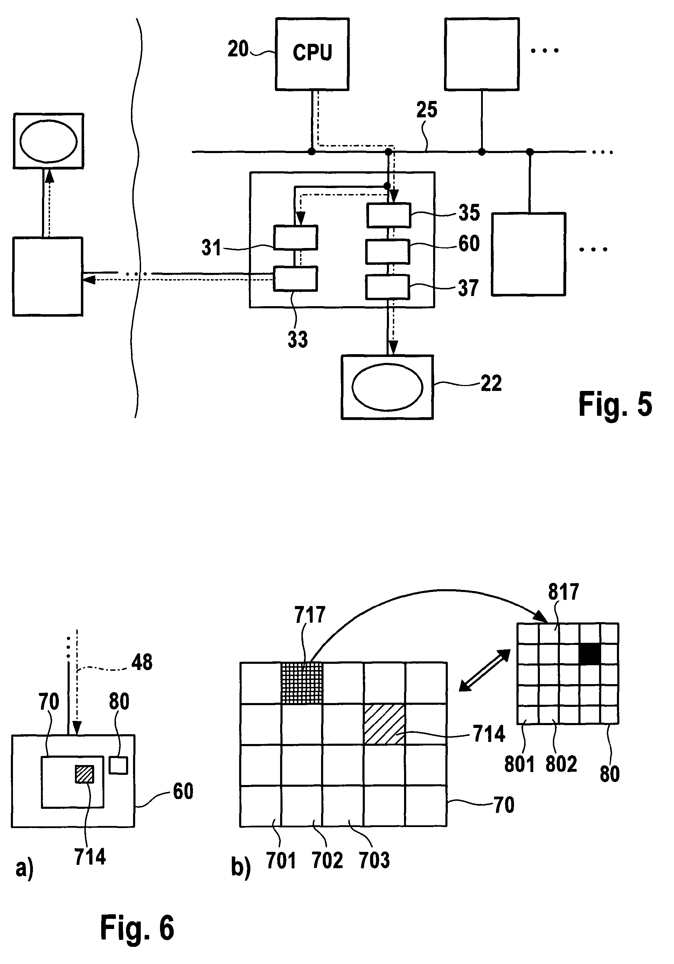

Fig. 5 shows a further embodiment of a graphics device according to the invention. Herein, the graphics device 50 comprises an acceleration logic 35, which is used to manipulate the contents of the frame buffer. An advantage generally achieved is improved performance and less load of CPU 20. For this purpose, the acceleration logic 35 obtains specific instructions from the CPU 20. The remote controller 31 according to this embodiment snarfs and then duplicates these instructions. However, the acceleration functionality on the remote system has to mimic that of the logic 35 as consistency has to be maintained between images displayed locally and remotely according to the same duplicate instructions.

It is noted that this kind of instruction snarfing is performed on a hardware level according to the invention. The advantage arises thereof such that no additional workload for the CPU 20 is required. Existing software based solutions introduce an additional layer between the operations system (OS) and the graphics driver. This layer is able to transfer the digital image representation data to a remote location via a host system's LAN. However, the present approach is totally transparent to the host system.

Fig. 6 shows an embodiment in accordance with Fig. 3, which relates to a single frame buffer concept managed with a graphics device 50 according to the invention. The memory unit 60 is herein configured with a single buffer frame 70 (Fig. 6a). The CPU 20 issues a write/change command 48 addressed to the memory unit 60 in order to modify the frame buffer 70.

The corresponding modifications of the frame buffer 70 are allowed within pauses of the continuous transfer of digital representation data of the image to the display controller 37 and thereof further to the display device 22. The remote transfer controller 31 equivalently accesses the frame buffer 70. It reads out data from the frame buffer 70 and transfers it to the remote interface 33, which is represented by a LAN-interface according to this embodiment.

At an initialization step the complete content of the frame buffer 70 has to be read out by the remote transfer controller 31. In the following, only those data, which have undergone a write/change 48, have to be selected. The selection of the data by the remote transfer controller 31 is performed in parallel to the transferal of data to the display device 22 by the display controller 37 and may proceed, even while new write/changes 48 are applied to the frame buffer 70.

After initialization, only write/changed data are transferred to a remote location. For this purpose, the frame buffer 70 is divided into a plurality of sections 701, 702, 703, etc., each of the sections comprising a number of bits storing the digital representation data as schematically indicated by section 717 in Fig. 6b.

A change buffer 80 indicating write changes is associated with the frame buffer 70. The change buffer 80 has bit sections 801, 802, etc., which individually correspond to sections 701, 702 of the frame buffer. On a write/change 48 to the frame buffer 70, the corresponding bits in the change buffer are coincidently set, e.g., from a level "0" to "1". However, as soon as the remote transfer controller 31 reads out data from the frame buffer 70, the corresponding bits in the change buffer 80 are cleared again, i.e., are reset to "0". Therefore all bits, which are set in the change buffer 80, indicate that the corresponding sections 701, 702, etc. of the single frame buffer 70 are due to transferring them to the remote location.

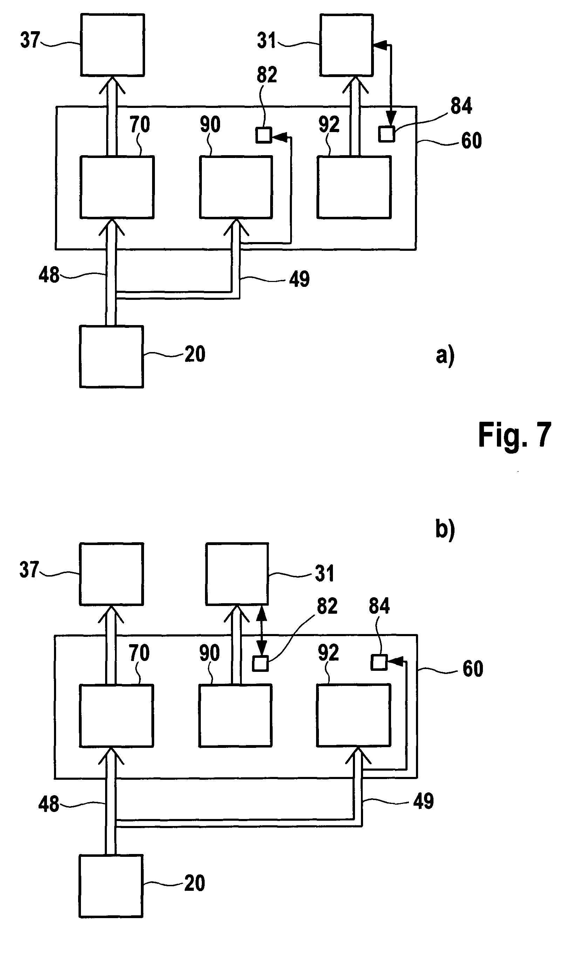

Fig. 7 illustrates a further embodiment of the invention, wherein remote buffers 90, 92 are added to the single frame buffer 70 within video memory 60. In Fig. 7a it is shown that the CPU 20 applies write changes 48 to the frame buffer 70. Further, the write changes are duplicated to changes 49, which alter the digital representation of data contained within remote buffer 90. A change buffer 82 is associated with remote buffer 90 in order to record changes to this buffer applied in a recent time interval as explained with regard to Fig. 6. Simultaneously, remote buffer 92 is read out by remote controller 31 and frame buffer 70 is read out by display controller 37 for local / remote display. To reduce the amount of data to be transferred, i.e. to compress the data, remote transfer controller accesses the change buffer 84 associated with remote buffer 92.

Fig. 7b shows the situation after remote transfer controller 31 has switched to the first remote buffer 90. This may occur, when all flags in change buffer 84 have been cleared. CPU 20 then starts to write changes 49 to the second remote buffer 92.

According to a still a further embodiment, which relates to the double frame buffer concept, multiple frame and/or remote buffers are implemented in the memory unit 60, i.e., the video memory. In contrast to the previous embodiments the utilization of these buffers, or more precisely: the utilization of storage location within video memory, changes with time. For example, three buffers of similar size may be arranged within video memory. Starting operation of a corresponding graphics device to display an image on a local monitor, a first of these buffers functions as a frame buffer, wherein the digital representation data stored in this buffer are read out by a display controller.

While the data already stored in the first buffer are being read out by the display controller, a working copy is prepared in a second one of the buffers. The host system may then manipulate the content of this second buffer. Simultaneously, the remote transfer controller reads out data from the second buffer, wherein only changes are monitored with the aid of a change buffer similar to those indicated in the previous embodiments.

When the display of data switches to the second buffer by means of the display controller, the data retrieval by the remote transfer controller from the same buffer may continue. A working copy of the second buffer is then prepared in the first buffer, which is followed by manipulation therein due to the host system. In this situation the second buffer changes its function from a frame buffer into a remote buffer, as digital representation data are still retrieved from this buffer by the remote transfer controller.

Having finished data display from the first buffer, the display controller switches to the third one of the buffers in the same manner as described above (prepare working copy and start display of data on local monitor), while the remote transfer controller still continues to read out data from the second (remote) buffer.

Two change buffers are required according to this embodiment, one change buffer, which has monitored changes 48 of the current remote buffer and a second change buffer logging changes 48 of the frame buffer, which is currently manipulated by the host system.

Three buffers are utilized because the reading out of data by the remote transfer controller takes more time than that of the display controller. The two frame buffers perform the known switching scheme, but further interchange their storage location with that of the remote buffers, once all change have been transmitted by the remote transfer controller to the remote location. As a result, this dynamic buffer management employing a remote buffer in addition to two frame buffers improves the timing performance.

## Claims

1. A graphics device (50), which is adapted to be coupled to an internal bus (25) of a local data processing unit, comprising:
- a memory unit (60), which is adapted to store digital representation data of an image to be displayed on the monitor (22), wherein the digital representation data are provided to the memory unit (60) via the internal bus (25);
- a display controller (37), adapted to read out from the memory unit (60) digital representation data of the image and to provide this data to a local monitor (22);
- a remote transfer controller (31) adapted to select from the memory unit (60) at least a subset of the digital representation data; and
- a remote interface (33) adapted to receive from said remote transfer controller (31) the selected digital representation data or the subset thereof, or data based on the selected digital representation data or the subset thereof, and to transmit said data to a remote data processing unit for remote visualization.

2. The graphics device (50) of claim 1, wherein remote transfer controller (31) is adapted to compress said digital representation or the subset thereof, before being received by the remote interface (33).

3. The graphics device (50) of claim 1 or any one of the above claims, wherein the internal bus (25) is one of: a PCI-bus, a PCI-Express bus, an AGP-bus.

4. The graphics device (50) of claim 1 or any one of the above claims, wherein the remote interface (33) is adapted to transfer the selected digital representation data, or the subset thereof, to a remote data processing unit via a local area network (LAN).

5. The graphics device (50) of claim 1 or any one of the above claims, wherein the memory unit (60) is configured with at least one frame buffer (70) for storing the digital representation data to be displayed on the monitor (22) by means of the display controller (37).

6. The graphics device (50) of claim 1 or any one of the above claims further comprising at least one remote buffer (90, 92) for storing digital representation data to be transferred to the remote data processing unit by means of the remote transfer controller (31).

7. The graphics device (50) of claim 5 or any one of the above claims, wherein
- the at least one frame buffer (70) is divided into a plurality of sections (701, 702, 703);
- the memory unit (60) is further configured with a change buffer (80), which is arranged to indicate write changes (48) applied to the digital representation data stored in one or more of the sections (701, 702, 703) of the frame buffer (70);
- said change buffer (80) comprises a characteristic property, which is each related to a respective section (701, 702, 703) of the frame buffer (70) and reflects an occurrence of a write change (48) within a recent time interval.

8. The graphics device of claim 6, wherein
- the at least one remote buffer (90, 92) is divided into a plurality of sections (701, 702, 703);
- the memory unit (60) is further configured with a change buffer (80), which is arranged to indicate write changes (49) applied to the digital representation data stored in the one or more of the sections (701, 702, 703) of the remote buffer (90, 92);
- said change buffer (80) comprises a characteristic property, which is each related to a respective section (701, 702, 703) of the remote buffer (90, 92) and reflects an occurrence of a write change (49) within a recent time interval.

9. The graphics device (50) of claim 6 or any one of the above claims, wherein the remote transfer controller (31) is adapted to select a subset of the digital representation data stored in the memory unit (60) within the frame buffer (70) in dependence of the write changes (48, 49) indicated by the characteristic property stored in the change buffer (80).

10. The graphics device (50) of claim 6 or any one of the above claims, wherein the memory unit (60) is configured with a single frame buffer (70) and a first (90) and a second (92) remote buffer, which are each arranged to store duplicate information of the digital representation data of said image contained in the first frame buffer (70).

11. The graphics device (50) of claim 10, wherein the remote transfer controller (31) is adapted to switch between said remote buffers (90, 92) for selecting the subset of digital representation data in dependence of a signal flag, which is issued by a host system (20) and indicates a current write or change (49) of digital representation data applied to one of the remote buffers

12. The graphics device (50) of claim 6 or any one of the above claims, wherein the display controller (37) is adapted to select the digital representation data to be displayed on the local monitor (22) from the first frame buffer (70), and the remote transfer controller (31) is adapted to select the subset of digital representation data from one said remote buffers (90, 92).

13. The graphics device of claim 6 or any one of the above claims, wherein the memory unit (60) is configured with double frame buffers (70) and with one remote buffer (90), wherein the remote buffer (90) and each one of the two frame buffers (70) are arranged to store duplicate information of the digital representation data of said image contained in the respective other frame buffer (70).

14. The graphics device (50) of claim 1 or any one of the above claims, wherein the remote transfer controller (31) is further directly connected to the internal bus (25) for selecting at least a subset of the digital representation data sent to the memory unit (60) via the internal bus (25) and for compressing the volume of said digital representation data.

15. The graphics device (50) of claim 14, further comprising an acceleration logic (35), wherein the remote transfer controller (31) is further arranged to select instructions sent to the acceleration logic (35) via the internal bus (25).

16. The graphics device (50) of claims 14 or 15, wherein the remote transfer controller (31) is further arranged to switch between
- selecting instructions or the subset of the digital representation data sent via the internal bus (25) by means of said direct connection, and
- selecting the subset of digital representation data stored in the memory unit (60).

17. A method of providing digital representation data of an image from a local data processing unit to a remote data processing unit, the local data processing unit comprising a graphics device (50) having a memory unit (60), which is adapted to store the digital representation data of the image, a display controller (37), which is connected to the memory unit (60) for reading out digital representation data of the image and displaying the image on a local monitor (22), comprising:
- storing the digital representation data of the image in the memory unit (60);
- accessing the memory unit (60) by means of a remote transfer controller (31) to select at least a subset of the digital representation data from the memory unit (60); and
- transmitting said subset of the digital representation data to the remote data processing unit via a remote interface (33).
